# NEUE EUROPÄISCHE PATENTSCHRIFT

(11) **EP 0 780 081 B2**
(45) Veröffentlichungstag und Bekanntmachung des Hinweises auf die Entscheidung über den Einspruch: **27.09.2006**
(45) Hinweis auf die Patenterteilung: 12.12.2001
(21) Anmeldenummer: 96101099.8
(22) Anmeldetag: 26.01.1996
(51) Int. Cl.: A47J 45/06, A47J 27/62, F24C 7/08

(54) **Verfahren zur automatischen Regelung von beheizbaren Kochstellen**
Method for the automatic regulation of heatable cooking surfaces
Méthode pour régler automatiquement des emplacements de cuisson chauffants

(30) Priorität: 23.12.1995 DE 29520538 U
(43) Veröffentlichungstag der Anmeldung: 25.06.1997
(73) Patentinhaber: AEG Hausgeräte GmbH, 90429 Nürnberg (DE)
(72) Erfinder: Kern, Dietmar, Dr.-Ing., 90455 Nürnberg (DE)
(74) Vertreter: Schröer, Gernot H.

(56) Entgegenhaltungen:
- EP-A- 0 142 153
- DE-A- 3 000 593
- DE-A- 3 836 099
- DE-C- 3 811 925
- DE-U- 9 408 514
- FR-A- 2 645 660
- FR-A- 2 706 050

## Beschreibung

Die Erfindung betrifft ein Verfahren zur automatischen Regelung von beheizbaren Kochstellen.

Zur Vereinfachung der Zubereitung von Speisen in Kochgeschirren und zur besseren Kontrolle des Kochvorgangs ist es wünschenswert, diesen zu automatisieren. Eine Automatisierung könnte durch eine Programmsteuerung erreicht werden. Allerdings müßte dazu das jeweilige Kochgeschirr mit einer Vorrichtung versehen sein, durch die entsprechende Kochparameter in Form von Signalen an die Programmsteuerung übermittelbar sind.

Aus der europäischen Patentschrift 0 587 532 ist ein Dampfdruckkochtopf bekannt, bei dem in einem Ventilgehäuse ein.unter der Wirkung einer Ventilfeder stehender Drückstift axial begrenzt verschiebbar gelagert ist. Neben dem Druckstift ist im Ventilgehäuse ein Positionssensor angeordnet, der einem im Druckstift angeordneten Magneten ausgesetzt ist. Bei einer Änderung des Druckes im Dampfdruckkochtopf verschiebt sich der Druckstift, wobei sich entsprechend die magnetische Flußdichte an der Stelle des magnetischen Positionssensors ändert. Die am Positionssensor abgreifbare Spannung ist dann ein direktes Maß des im Dampfdruckkochtopf herrschenden Druckes.

Die Erzeugung der Sensorsignale ist nach dieser technischen Lehre auf einem Dampfdruckkochtopf beschränkt. Allerdings ist es auch denkbar in normalen Kochtöpfen beispielsweise im Griff oder an einer anderen dafür vorzusehenden Stelle Sensoren für kochspezifische Parameter vorzusehen.

Aus der EP-A2 0 142 153 ist eine Anordnung zum Messen der Temperatur in einem Heizsystem, bestehend aus Heizplatte und Kochtopf, bekannt, bei der ein Kochtopf so gestaltet werden kann, daß er wie ein üblicher Kochtopf gehandhabt und gereinigt werden kann und keine Batterie für die Sendeeinrichtung benötigt. Bei dieser Anordnung kann die Temperatur des im Kochtopf enthaltenen Kochgutes gemessen werden.

Aus der DE-A1 38 36 099 ist eine Fernmeßeinrichtung zur Messung und Übertragung verschiedener Daten innerhalb eines Kochtopfes bekannt, bei der im Deckel eines Kochtopfes eine Meßstadion untergebracht ist, deren Ausgangssignale mittels einer Sendeantenne zu einer Auswertestadion übertragen werden. Mit dieser Fernmeßeinrichtung soll eine Sendeeinheit zur Verfügung gestellt werden, die mit geringem Energiebedarf auskommt und nicht im Mikrowellenbereich arbeitet. Bei mehreren Gargeräten sind den einzelnen Behältnissen verschiedene Kodierungen zugeordnet.

Die Französische Patentanmeldung 2706050 beschreibt ebenfalls ein Verfahren zur Automatisierung des Kochens bei dem an einem Kochgerät ein Drucksensor angebracht ist, der den Druck innerhalb des Kochgerätes mißt und berührungslos an eine elektronische Kontroll- und Programmsteuereinheit übermittelt. In der elektronischen Kontroll- und Programmsteuereinheit werden die übermittelten Werte mit einem zeitabhängigen Wert verglichen und abhängig vom Resultat des Vergleichs die Heizeinrichtungen gesteuert. Auch bei dieser Vorrichtung wird lediglich eine Messung von kochprozeßspezifischen Parametern, nämlich des Druckers, vorgenommen.

Aus der DE 21 61 371 C3 ist ein Regelgerät zur Steuerung eines Kochvorganges bekannt, das ein vom Dampf im Inneren eines Kochtopfes betätigbares drahtloses Übertragungsorgan besitzt. Bei mehreren Kochplatten, die mit dem Regelgerät ausgerüstet sind, können die Frequenzen der zugehörigen Steuereinheiten sowie der zugehörigen Empfänger unterschiedlich sein.

Die EP 0 098 491 A2 zeigt eine Fernmesseinrichtung mit einer ortsfesten Abfragestation und einer gargefäßgebundenen Temperaturmessstation, die wenigstens einen Informationssender und einen Informationsempfänger aufweisen. Um mehrere gleichzeitig vorhandene Messstationen nacheinander abfragen zu können, besteht die Möglichkeit, die Abfragestation zusätzlich mit einem Öffnungscodespeicher und einem Öffnungscodesender und die Messstation mit einem Öffnungscodespeicher, einem Öffnungscodeempfänger und einem Öffnungscodevergleicher auszustatten.

In der DE 37 33 108 C1 ist eine Schaltungsanordnung für ein Topferkennungssystem mit Topferkennungssensor beschrieben, der auf einer Leiterstruktur am Kochfeld basiert und einen passiven Vierpol mit einer frequenzabhängigen Betriebsübertragungsfunktion darstellt, über die unterscheidbar ist, ob sich ein Kochtopf aus Metall oder aus Glas bzw. Porzellan auf der Kochstelle befindet, was die Besonderheiten von Mikrowellenkochstellen berücksichtigt.

Um serienmäßig hergestellte Strahlungsheizungen auch nachträglich mit einer Topfgroßenerkennung ausrüsten zu können, zeigt die DE 42 24 934 A1 eine Sensoranordnung für eine Topferkennung mit Hochfrequenzschaltungstechnik, wobei mindestens zwei kapazitiv wirkende Topferkennungssensoren am äußeren Rand der Strahlungsheizkörper angeordnet sind und mittels einer Auswerteelektronik automatisch die jeweils notwendige aktive Heizzone an die mittels der Topferkennungssensoren detektierte Topfgröße anpassbar ist.

Die DE 94.08 514 U1 schließlich zeigt ein Identifikationssystem für Kochmulden, wobei das System Kochmulde, Gargerät eine Funktionseinheit darstellt und auf dem Gargeräteboden eine Codierung der Gargerätebodenbeschaffenheit, der Gargerätbodendicke, des Gargerätematerials, der Gargeräteauflage und der Gargeräteveredelung angeordnet ist, die durch eine unter der Kochfläche angeordnete Elektronik erkannt werden kann, die unter Verknüpfung mit gargutspezifischen Eigenschaften eine Regelung des Kochvorganges durchführt.

Aufgabe der Erfindung ist es, ein Verfahren zur programmgesteuerten Regelung von beheizbaren Kochstellen zu schaffen, bei dem der Kochprozeß abhängig vom verwendeten Kochgeschirr entsprechend einer Programmvorgabe automatisch gesteuert werden kann.

Diese Aufgabe wird durch ein Verfahren zur automatischen Regelung von beheizbaren Kochstellen entsprechend einem vorgebbaren Kochprogramm gelöst, wobei ein Kochgeschirr ein oder mehrerer Sensoren zur Detektion von kochprozeßspezifischen Parametern sowie Mittel zur drahtlosen Übertragung der detektierten Sensorsignale aufweist, wobei
a) den beheizbaren Kochstellen eine Ansteuervorrichtung mit einem Empfangsteil für die Sensorsignale sowie eine Programmsteuerung zugeordnet ist,
b) die Heizleistung über die Programmsteuerung in Abhängigkeit von den Sensorsignalen eingestellt wird und
c) vom Kochgeschirr neben den kochprozeßspezifischen Sensorsignalen auch kochgeschirrspezifische Signale über die Grösse gesendet und diese in der Programmsteuerung berücksichtigt werden.

Diese Aufgabe wird durch ein Verfahren zur automatischen Regelung von beheizbaren Kochstellen entsprechend einem vorgegebbaren Kochprogramm gelöst, wobei ein Kochgeschirr Sensoren zur Detektion von kochprozeßspezifischen Parametern sowie Mittel zur drahtlosen Übertragung der delektierten Sensorsignale aufweist, wobei den beheizbaren Kochstellen eine Ansteuervorrichtung mit einem Empfangsteil für die Sensorsignale sowie eine Programmsteuerung zugeordnet ist, wobei die Heizleistung über die Programmsteuerung in Abhängigkeit von den Sensorsignalen eingestellt wird.

Die drahtlose Übertragung kann dabei mittels dem Fachmann bekannterTechniken durchgeführt werden. Vorzugsweise kann eine digitale Datenübertragung verwendet werden.

Bei den kochgeschirrspezifischen Signalen handelt es sich um die Grösse des Kochgeschirrs, insbesondere das Volumen des Kochgeschirrs, den Durchmesser und die Höhe.

Nach einer weiteren vorteilhaften Ausbildung der Erfindung weisen die beheizbaren Kochstellen einen Detektorfür ein Kochgeschirrauf, wobei bei mindestens einer Kochstelle eine Testphase zur Erkennung des Kochgeschirrs und zu dessen Zuordnung zur jeweiligen Programmsteuerung durchgeführt wird. Bei der Automatisierung des Kochvorgangs ist es natürlich notwendig, daß die der Jeweiligen beheizbaren Kochstelle zugeordnete Programmsteuerung wissen muß, weiches Kochgeschirr sich auf ihr befindet. Dies gilt selbstverständlich auch dann, wenn nur eine Programmsteuerung, d. h. eine Datenverarbeitungsanlage für eine Mehrzahl von Kochstellen verwendet wird, damit diese Programmsteuerung dann die jeweilige in Frage kommende Kochstelle ansteuert.

Eine solche Testphase kann darin bestehen, daß von den Programmsteuerungen oder der Programmsteuerung zunächst nur eine Kochstelle kurz beheizt und dann detektiert wird von welchem Topf eine Änderung beispielsweise der Temperatur zurückgemeldet wird. Danach kann diese Kochstelle wieder abgeschaltet oder auf der gleichen Temperatur gehalten werden und dann eine weitere Kochstelle beheizt werden, so daß widerum durch den gemessenen Temperaturanstieg auf das jeweilige Kochgeschirr zurückgeschlossen werden kann. Sind noch weitere Kochgeschirre auf weiteren beheizbaren Kochstellen vorhanden, so kann dieses Verfahren sukzessive bis zur Detektion des letzten Kochgeschirrs durchgeführt werden.

Dieses Verfahren ist dann besonders sinnvoll, wenn die Vorgabe des Programms nicht über Schalter erfolgt, die den beheizbaren Kochstellen zugeordnet sind, sondern beispielsweise das Kochprogramm über Einstellmittel vorgegeben wird, die sich direkt am Kochgeschirr selbst befinden und die Kochstelle über einen zugeordneten Schalter lediglich ein- oder ausgeschaltet oder nur dann aktiviert wird, wenn vom Kochgeschirr selbst Signale gesendet werden. Vorteilhaft wäre bei der letztgenannten Möglichkeit, wenn die Aktivierung der Kochstelle zusätzlich durch eine Sicherheitsvorrichtung, die an der Kochstelle oder beispielsweise bei Keramikkochfefdern unterhalb der Keramik angeordnet sein kann, sichergestellt wird, ob sich tatsächlich ein Kochgeschirr auf der Kochstelle befindet.

Eine zur Ausführung des Verfahrens geeignete Vorrichtung läßt sich für den Fachmann in naheliegender Weise aus zum Zeitpunkt der Anmeldung bekannten Mitteln realisieren.

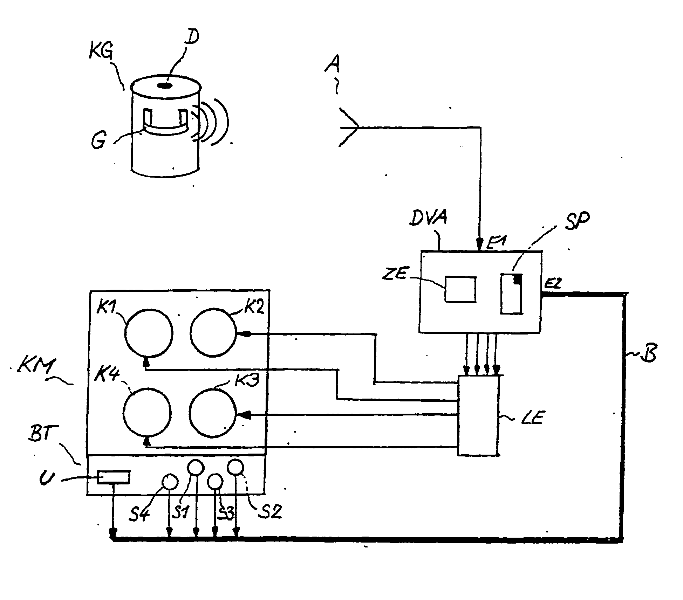

Ein Ausführungsbeispiel wird im folgenden anhand der Zeichnung beschrieben.

In der Fig. ist ein Herd H stilistisch dargestellt. Er verfügt über eine Kochmulde KM sowie über eine der Kochmulde zugeordnete Bedientafel BT. Die Kochmulde KM weist vier beheizbare Kochstellen K1 bis K4 auf. Die Bedientafel verfügt über die Schalter S1 bis S4 und eine Uhr U. Die Kochstellen werden über eine Datenverarbeitungsanlage DVA und eine dieser nachgeordneten Leistungseinheit LE angesteuert. Die Datenverarbeitungsanlage DVA weist eine Zentraleinheit ZE auf sowie einen oder mehrere Speicher bzw. Speichermedien SP auf. Außerdem verfügt die Datenverarbeitungsanlage über allgemein bekannte Einrichtungen, die der Einfachheit halber nicht näher dargestellt sind. Außerdem weist die Datenverarbeitungsanlage DVA einen Eingang E1 für eine Antenne A auf. Ein weiterer Eingang E2 ist mit einem Bussystem B verbunden, über das die Schaltelemente S1 bis S4 und die Uhr an die Datenverarbeitungsanlage DVA angeschlossen sind.

Des weiteren ist in der Fig. ein Kochgeschirr KG mit einem Deckel D dargestellt. Von diesem Kochgeschirr ist ein Griff G gezeigt, in dem ein oder mehrere Sensoren untergebracht sind, die zur Messung von kochprozeßspezifischen Signalen geeignet sind. Außerdem ist im Griff G eine Vorrichtung zur drahtlosen Übertragung der von den Sensoren detektierten kochprozeßspezifischen Signale untergebracht. Auf die Art der kochprozeßspezifischen Signale wurde bereits einleitend hingewiesen.

Die Datenverarbeitungsanlage DVA und die zugehörige Antenne A sind der Kochmulde KM direkt zugeordnet und sind vorteilhafter Weise direkt an der Kochmulde mit eingebaut. Die,Daten zur Verarbeitung der kochprozeßspezifischen Signale von den Sensoren des Kochgeschirrs KG sind im Speicher SP der Datenverarbeitungsanlage DVA abgelegt. Sie werden entweder direkt dann aktiviert, wenn vom Kochgeschirr KG die Daten gesendet werden oder wenn über das jeweilige Schaltelement S1 bis S4 ein Signal an die Datenverarbeitungsanlage gemeldet wird. Im ersten Fall könnte die Aktivierung des Kochprozesses über einen am Kochgeschirr KG angebrachte Signaigebeeinrichtung, beispielsweise einem Schalter, der entweder direkt vom Deckel D aktiviert werden könnte oder über am Griff G angebracht und dort eingeschaltet werden könnte.... Wenn die Aktivierung direkt vom Kochgeschirr KG aus erfolgen würde, könnte sogar auf Schaltelemente S1 bis S4 verzichtet werden, so daß man eine vollautomatische Steuerung des Kochprozesses erreichen würde.

Wird der Kochprozeß über einen der Schalter S1 bis S4 gestartet, so wäre es denkbar, daß die im Kochgeschirr KG bzw. In dessen Griffen G untergebrachte Einrichtung erst bei Detektion eines gewissen Temperaturschwellwertes oder eines anderen detektierten Sensorsignals die drahtlose Signalübertragung startet. Über das entsprechende Schaltelement S1 bis S4 könnte dann im einfachsten Fall die Kochtemperatur eingegeben und über die Datenverarbeitungsanlage DVA sensorsignalgesteuert eingehalten werden. Es könnte aber auch ein spezielles Kochprogramm eingestellt werden, das beispielsweise für bestimmte Zeitdauern unterschiedliche Temperaturen oderDrucktemperaturkombinationen einstellt. Über die Uhr U kann noch die gesamte Dauer des Kochprozesses soweit diese nicht sowieso im Kochprogramm bereits berücksichtigt wird, eingestellt werden.

Das Kochgeschirr sendet zusätzlich zu den kochprozeßspezifischen Signalen kochgeschirrspezifische Signale über die Größe des Kochgeschirrs (Volumen, Durchmesser, Höhe) sowie ggfs. eine spezielle Erkennung des jeweiligen Kochgeschirrs an die Datenverarbeltungsanlage DVA. Damit ist es möglich, bei mehreren Kochgeschirren zu unterscheiden, von welchem Kochgeschirr das jeweilige Signal stammt und somit immer die richtige Kochstelle ansteuert.

Es sei noch darauf hingewiesen, daß ein Drucksensor wie er beispielsweise bei dem als Stand der Technik angeführten Dampfdruckkochtopf verwendet wird nicht zwangsläufig im Deckel D des Kochgeschirrs untergebracht sein, sondern genauso an einer anderen Stelle des Topfes, beispielsweise auch an den bzw. in den Füßen mit denen der Griff G am Topf befestigt ist, untergebracht sein könnte. Es ist allerdings auch vorteilhaft, die gesamte Sensorik sowie die Einrichtungen zur Datenübertragung im Deckel D unterzubringen, weil dann unterschiedliche Kochgeschirre KG mit gleichem Deckeldurchmesser verwendet werden könnten. Selbstverständlich ist es dann auch denkbar, ein Kochgeschirr KG größeren bzw. kleineren Durchmesser für einen gleichen Deckeldurchmesser zu verwenden, wenn die Öffnung des Kochgeschirres entsprechend angebracht ist.

## Patentansprüche

1. Verfahren zur automatischen Regelung von beheizbaren Kochstellen entsprechend einem vorgebbaren Kochprogramm, wobei ein Kochgeschirr ein oder mehrere Sensoren zur Detektion von kochprozeßspezifischen Parametern sowie Mittel zur drahtlosen Übertragung der detektierten Sensorsignale aufweist, wobei
a) den beheizbaren Kochstellen eine Ansteuervorrichtung mit einem Empfangsteil für die Sensorsignale sowie eine Programmsteuerung zugeordnet ist,
b) die Heizleistung über die Programmsteuerung in Abhängigkeit von den Sensorsignalen eingestellt wird und
c) vom Kochgeschirr neben den kochprozeßspezifischen Sensorsignalen auch kochgeschirrspezifische Signale über die Grösse des Kochgeschirrs gesendet und diese in der Programmsteuerung berücksichtigt werden.

2. Verfahren nach Anspruch 1, bei dem kochgeschirrspezifische Signale zur Erkennung des jeweiligen Kochgeschirrs gesendet werden.

3. Verfahren nach Anspruch 1 oder 2, wobei die beheizbaren Kochstellen einen Detektor für ein Kochgeschirr aufweisen und wobei bei mindestens einer Kochstelle eine Testphase zur Erkennung des Kochgeschirrs und zu dessen Zuordnung zur jeweiligen Programmsteuerung durchgeführt wird.

4. Vorrichtung zur automatischen Regelung von beheizbaren Kochstellen entsprechend einem vorgebbaren Kochprogramm, wobei
a) ein Kochgeschirr ein oder mehrere Sensoren zur Detektion von kochprozeßspezifischen Parametern und Mittel zur drahtlosen Übertragung der detektierten Sensorsignale sowie von kochgeschirrspezifischen Signalen für die Größe des Kochgeschirrs aufweist und wobei
b) den beheizbaren Kochstellen eine Ansteuervorrichtung mit einem Empfangsteil für die Sensorsignale und die kochgeschirrspezifischen Signale für die Größe des Kochgeschirrs sowie eine Programmsteuerung zur Steuerung der Heizleistung der Kochstellen in Abhängigkeit von den kochprozeßspezifischen und den kochgeschirrspezifischen Signalen für die Größe des Kochgeschirrs zugeordnet ist.

5. Vorrichtung nach Anspruch 4, bei kochgeschirrspezifische Signale für die die Erkennung des jeweiligen Kochgeschirrs vorgesehen sind.

6. Vorrichtung nach Anspruch 4 oder 5, wobei die beheizbaren Kochstellen einen Detektor für ein Kochgeschirr aufweisen.

## Claims

1. Method of automatically regulating heatable hot plates according to a specifiable cooking program, wherein a cooking utensil has one or more sensors for detecting parameters specific
to the cooking process and means for the wireless transmission of the detected sensor signals, wherein
a) a trigger device having a receiving part for the sensor signals and a program control is allocated to the heatable hot plates,
b) the heating power is set via the program control as a function of the sensor signals, and
c) from the cooking utensil, in addition to the sensor signals specific to the cooking process, signals specific to the cooking utensil relating to the size of the cooking utensil are transmitted, and these are taken into account in the program control.

2. Method according to claim 1, in which signals specific to the cooking utensil for recognising the respective cooking utensil are transmitted.

3. Method according to claim 1 or 2, wherein the heatable hot plates have a detector for a cooking utensil and wherein in at least one hot plate a test phase is carried out to recognise the cooking utensil and allocate it to the respective program control.

4. Device for automatically regulating heatable hot plates according to a specifiable cooking program, wherein
a) a cooking utensil has one or more sensors for detecting parameters specific to the cooking process and means for the wireless transmission of the detected sensor signals and of signals specific to the cooking utensil relating to the size of the cooking utensil, and wherein
b) a trigger device having a receiving part for the sensor signals and the signals specific to the cooking utensil relating to the size of the cooking utensil and a program control for controlling the heating power of the hot plates as a function of the signals specific to the cooking process and the cooking utensil relating to the size of the cooking utensil is allocated to the heatable hot plates.

5. Device according to claim 4, in which the signals specific to the cooking utensil are provided for the recognition of the respective cooking utensil.

6. Device according to claim 4 or 5, wherein the heatable hot plates have a detector for a cooking utensil.

## Revendications

1. Procédé pour régler automatiquement des emplacements de cuisson chauffants en fonction d'un programme de cuisson prédéfinissable, où un récipient de cuisson présente un ou plusieurs capteurs pour la détection de paramètres spécifiques au processus de cuisson ainsi que des moyens pour la transmission sans fil des signaux de capteur détectés où
a) il est associé aux emplacements de cuisson chauffants un dispositif de commande avec une partie de réception pour les signaux de capteur ainsi qu'une commande par programme,
b) la puissance de chauffe est réglée par la commande par programme en fonction des signaux de capteur et
c) par le récipient de cuisson, à part les signaux de capteur spécifiques au processus de cuisson, également des signaux spécifiques au récipient de cuisson se rapportant à la grandeur du récipient de cuisson sont émis et ceux-ci sont pris en considération dans la commande par programme.

2. Procédé selon la revendication 1, où des signaux spécifiques au récipient de cuisson pour la détection du récipient de cuisson respectif sont émis.

3. Procédé selon la revendication 1 ou 2, où les emplacements de cuisson chauffants présentent un détecteur pour un récipient de cuisson, et où dans au moins un emplacement de cuisson, il est exécuté une phase de test pour détecter le récipient de cuisson et pour associer celui-ci à la commande par programme respective.

4. Dispositif pour régler automatiquement des emplacements de cuisson chauffants selon un programme de cuisson prédéfinissable, où
a) un récipient de cuisson présente un ou plusieurs capteurs pour la détection de paramètres spécifiques au processus de cuisson et des moyens pour la transmission sans fil des signaux de capteur détectés ainsi que de signaux spécifiques au récipient de cuisson se rapportant à la grandeur du récipient de cuisson et où
b) il est associé aux emplacements de cuisson chauffants un dispositif de commande avec une partie de réception pour les signaux de capteur et les signaux spécifiques au récipient de cuisson se rapportant à la grandeur du récipient de cuisson ainsi qu'une commande par programme pour commander la puissance de chauffe des emplacements de cuisson en fonction des signaux spécifiques au processus de cuisson et spécifiques au récipient de cuisson se rapportant à la grandeur du récipient de cuisson.

5. Dispositif selon la revendication 4, où des signaux spécifiques au récipient de cuisson sont prévus pour la détection du récipient de cuisson respectif.

6. Dispositif selon la revendication 4 ou 5, où les emplacements de cuisson chauffants présentent un détecteur pour un récipient de cuisson.
